# EUROPÄISCHE PATENTSCHRIFT

(11) **EP 1 094 089 B1**
(45) Veröffentlichungstag und Bekanntmachung des Hinweises auf die Patenterteilung: **29.09.2004**
(21) Anmeldenummer: 00126199.9
(22) Anmeldetag: 13.04.1995
(51) Int. Cl.: C08G 77/50, C08G 77/46, G02F 1/15, H01M 10/40, H01M 6/18, C09K 9/00, C08L 83/14, C08K 3/16

(54) **Elektrolyt für Elektrochrome Systeme**
Electrolyte for electrochromic systems
Electrolyte pour systèmes électrochromes

(30) Priorität: 18.04.1994 DE 4413403
(43) Veröffentlichungstag der Anmeldung: 25.04.2001
(62) Teilanmeldung aus: 95917924.3
(73) Patentinhaber: INSTITUT FÜR NEUE MATERIALIEN GEM. GMBH, 66123 Saarbrücken (DE)
(72) Erfinder: Schmidt, Helmut, 66130 Saarbrücken-Güdingen (DE); Krug, Helmut, Harrison City, PA 15636 (US); Merl, Norbert, 30659 Hannover (DE); Moses, Anke, 65239 Hochheim a. M. (DE); Judeinstein, Patric, 91190 Gif sur Yvette (FR); Berni, Anette, 66894 Käshofen (DE)
(74) Vertreter: Barz, Peter, Dr.

(56) Entgegenhaltungen:
- EP-A- 0 372 584
- EP-A- 0 420 253
- WO-A-94/20507
- US-A- 5 283 310
- PATENT ABSTRACTS OF JAPAN vol. 013, no. 466 (C-646), 20. Oktober 1989 (1989-10-20) & JP 01 182325 A (SAGAMI CHEM RES CENTER), 20. Juli 1989 (1989-07-20)
- PATENT ABSTRACTS OF JAPAN vol. 016, no. 244 (C-0947), 4. Juni 1992 (1992-06-04) & JP 04 053872 A (TONEN CHEM CORP), 21. Februar 1992 (1992-02-21)
- PATENT ABSTRACTS OF JAPAN vol. 014, no. 480 (C-0771), 19. Oktober 1990 (1990-10-19) & JP 02 199173 A (FUJI PHOTO FILM CO LTD), 7. August 1990 (1990-08-07)

## Beschreibung

Die vorliegende Erfindung betrifft elektrochrome Dünnschichtsysteme und deren Komponenten, insbesondere solche, die über das Sol-Gel-Verfahren hergestellt werden.

Elektrochrome Dünnschichtsysteme werden in der Literatur in großer Zahl für verschiedene Anwendungsbereiche und in unterschiedlichen Kombinationen von Einzelkomponenten beschrieben.

Zur Herstellung der funktionalen Oxidschichten wurden bisher überwiegend Vakuummethoden wie thermisches Verdampfen, Sputtem oder CVD sowie Sprühpyrolyse und elektrochemische Abscheideverfahren beschrieben. Für die Herstellung großflächiger homogener Beschichtungen sind diese Verfahren jedoch ungeeignet bzw. zu kostenintensiv. In den letzten Jahren wurde ansatzweise versucht, derartige Systeme über Sol-Gel-Verfahren zu erzeugen, da diese sich durch eine große Variationsbreite und bedingt durch die Vermeidung der Vakuumtechnik durch wesentlich geringere Kosten für die Herstellung großflächiger homogener Beschichtungen auszeichnen.

Es wurde bereits eine Vielzahl von Elektrolyttypen für elektrochrome Systeme vorgeschlagen. Flüssige und rein organische Polymerelektrolyte sind jedoch wegen ihrer beschränkten Arbeitstemperaturbereiche, und rein anorganische wegen ihrer geringen lonenleitfähigkeit bei Raumtemperatur nur bedingt einsetzbar. Polymere Elektrolyte werden durch Heißpressen, anorganische meist durch Sputterverfahren zwischen den Oxidelektrodenschichten vorgesehen. Solche Elektrolyte sind aus JP-A-1 182 325, JP-A-4 053 872, EP-A-0 372 584 oder US-A-5 283 310 bekannt.

Aufgabe der vorliegenden Erfindung war es demgemäß, einen Elektrolyt für elektrochrome Systeme bereitzustellen, der bereits bei Raumtemperatur eine zufriedenstellende lonenleitfähigkeit zeigt, einen breiten Arbeitstemperaturbereich liefert und in vorteilhafter und einfacher Weise zwischen den Oxidelektrodenschichten vorgesehen werden kann.

Erfindungsgemäß wurde überraschend gefunden, daß neuartige organischanorganische Nanokompositsysteme auf der Basis bestimmter organisch modifizierter Alkoxysilane nicht nur die meisten Nachteile der bekannten Elektrolyte nicht aufweisen, sondern auch durch eine für derartige Komposite überraschend hohe ionische Leitfähigkeit ausgezeichnet sind, die bereits bei Raumtemperatur für befriedigend schnelle elektrochrome Funktionen sorgt.

Gegenstand der vorliegenden Erfindung ist ein Elektrolyt für elektrochrome Dünnschichtsysteme, der erhältlich ist durch
(a) partielle Hydrolyse und Kondensation mindestens eines Silans der allgemeinen Formel

   RₙSiX₄₋ₙ (I)

   worin die Reste R, gleich oder verschieden voneinander, für nichthydrolysierbare Gruppen stehen, von denen mindestens eine eine thermisch oder photochemisch polymerisierbare (bzw. polykondensierbare) Gruppierung umfaßt, die Reste X, gleich oder verschieden voneinander, für OH oder hydrolysierbare Gruppen stehen und n 1 oder 2 ist;
(b) Umsetzung des partiell hydrolysierten (kondensierten Silans von Stufe (a) mit einem bei Raumtemperatur flüssigen Diol und/oder Triol (vorzugsweise Diol), gegebenenfalls (und vorzugsweise) in Anwesenheit eines Initiators;
(c) Einstellung eines pH-Wertes im Bereich von 4,0 bis 8,0 mit Säure;
(d) Zugabe mindestens eines im System löslichen Alkalimetallsalzes zu irgend einem Zeitpunkt nach Stufe (a) und vor Stufe (c); und
(e) thermische oder Bestrahlungs-Behandlung des resultierenden Systems,
   wobei dem System zu irgendeinem Zeitpunkt nach Stufe (a) und vor Stufe (c) zusätzlich mindestens ein Silan der allgemeinen Formel

   R'ₘSiX₄₋ₘ (II)

   zugegeben wird, in welcher R' für Alkyl, Alkaryl, Aralkyl oder Aryl (vorzugsweise mit bis zu 20 und insbesondere bis zu 12 Kohlenstoffatomen) steht, die Reste X gleich oder verschieden voneinander, für OH oder hydrolysierbare Gruppen stehen und m 0 oder 1 ist.

In der obigen Stufe (a) werden im allgemeinen 10 bis 90%, vorzugsweise 20 bis 80% und insbesondere 30 bis 70% aller vorhandenen hydrolysierbaren Gruppen hydrolytisch abgespalten.

Beispiele für Gruppen X in den Formeln (I) und (II) sind solche der Formel OR" und OCOR", in denen R" für Alkyl mit 1 bis 8, insbesondere 1 bis 4 Kohlenstoffatome steht, sowie Halogen, insbesondere Chlor.

Vorzugsweise sind die Gruppen X identisch und ausgewählt aus OCH₃, OC₂H₅ und OC₃H₇, wobei OCH₃ und OC₂H₅ besonders bevorzugt sind.

Die Gruppen R in der Formel (I) sind vorzugsweise solche, die (mindestens) eine ethylenisch ungesättigte Bindung und/oder (mindestens) einen Epoxidring aufweisen. Konkrete Beispiele hierfür sind (Meth)acryloxy-C₂₋₆-alkyl und Glycidoxy-C₂₋₆-alkyl, wobei ein bevorzugtes Beispiel für die C₂₋₆-Alkylgruppe Propyl ist.

Weiter wird es bevorzugt, daß n in Formel (I) 1 bedeutet. Unter Berücksichtigung der soeben genannten bevorzugten Ausführungsformen sind somit (insbesondere unter Berücksichtigung ihrer leichten Zugänglichkeit) besonders bevorzugte konkrete Verbindungen der allgemeinen Formel (I) Glycidoxypropyltri(m)ethoxysilan und Methacryloxypropyltri(m)ethoxysilan.

Bei dem in der obigen Stufe (b) einzusetzenden bei Raumtemperatur flüssigen Diol und/oder Triol handelt es sich bevorzugt um ein Poly-C₂₋₆-alkylenglycol, insbesondere um ein Polyethylen- oder Polypropylenglycol. Konkrete Beispiele hierfür sind z.B. Diethylenglycol, Triethylenglycol, Tetraethylenglycol und Dipropylenglycol.

Andere bevorzugte Diole und/oder Triole, die in Stufe (b) eingesetzt werden können, sind Alkylenoxid-Addukte eines herkömmlichen Diols und/oder Triols (z.B. von Ethandiol, Propandiol, Butandiol, Hexandiol, Glycerin und Trimethylolpropan) mit Ethylenoxid und/oder Propylenoxid, wobei z.B. 1 bis 20, vorzugsweise 1 bis 10 Mol Ethylenoxid und/oder Propylenoxid an das Diol oder Triol addiert sein können.

Im Falle der Verwendung eines Silans der allgemeinen Formel (I), das einen Epoxidring umfaßt, dient die vorzugsweise eingesetzte Initiatorverbindung dazu, die Polymerisation der Epoxidgruppen und die teilweise Verknüpfung derselben mit den Diolen und/oder Triolen zu katalysieren. Zu diesem Zweck wird der Initiator vorzugsweise ausgewählt aus organischen Aminen, wie z.B. 1-Methylimidazol, N-3-(Triethoxy)propyl-4,5-dihydroxyimidazol, 4,4'-Diaminodiphenylmethan, Benzyldimethylamin und Diazabicycloundecan, Amingruppen-haltigen Silanen, wie z.B. N-(2-Amino-3-aminopropyl)-trimethoxysilan und 3-Aminopropyltrimethoxysilan, organischen Aluminiumverbindungen, wie z.B. Aluminium-sek.-butylat und Aluminiumbutoxyethanolat, gegebenenfalls nach Komplexierung mit einem Chelatliganden, und Aluminiumsalzen organischer und anorganischer Säuren wie z.B. Essigsäure, Propionsäure, Perchlorsäure, Salzsäure, Schwefelsäure, Phosphorsäure usw., gegebenenfalls nach vorheriger Komplexierung mit einem Chelatliganden. Selbstverständlich können auch andere Initiatoren eingesetzt werden, wie z.B. Bortrifluorid-Ethylamin-Komplex.

Das erfindungsgemäß einzusetzende und überraschenderweise die Leitfähigkeit des Elektrolyten deutlich erhöhende und die Aushärtung beschleunigende Silan der allgemeinen Formel (II) ist vorzugsweise ein solches, bei dem m 0 ist oder R' für C₁₋₄-Alkyl (z.B. Methyl oder Ethyl) steht. Besonders bevorzugte konkrete Beispiele für Silane der allgemeinen Formel (II) sind Tetramethoxysilan und Tetraethoxysilan.

Das gemäß Stufe (d) zuzugebende Alkalimetallsalz kann prinzipiell jedes Alkalimetallsalz sein, das sich im Beschichtungssystem löst. Im allgemeinen handelt es sich um ein Salz von Lithium, Natrium und/oder Kalium, insbesondere Lithium oder Natrium, wobei Lithiumsalze besonders bevorzugt sind. Aufgrund der Löslichkeitseigenschaft handelt es sich bei dem Gegenion in der Regel um das Perchlorat-Anion, obgleich auch andere Salze, wie z.B. Hydroxide verwendbar sind. Konkrete Beispiele für in Stufe (d) einsetzbare Alkalimetatisalze sind LiClO₄, NaClO₄ und LiOH.

Vorzugsweise wird das Alkalimetallsalz gleichzeitig mit oder nach dem in Stufe (b) eingesetzten Diol (Triol) zugegeben.

Obwohl die Mengenverhältnisse der eingesetzten Komponenten in weitem Rahmen schwanken können, werden dennoch im allgemeinen die im folgenden angegebenen Molmengen der einzelnen Komponenten pro Mol Silan der allgemeinen Formel (I) eingesetzt
(i) 0,01 bis 3,0 Mol, vorzugsweise 0,25 bis 2,25 Mol und insbesondere 1,0 bis 1,75 Mol Diol und/oder Triol;
(ii) 0,01 bis 2,0 Mol, vorzugsweise 0,025 bis 1,0 Mol und insbesondere 0,05 bis 0,75 Mol Alkalimetallsalz;
(iii) 0,01 bis 1,0 Mol, vorzugsweise 0,025 bis 0,5 Mol und insbesondere 0,05 bis 0,25 Mol Initiator;
(iv) 0,01 bis 0,3 Mol, vorzugsweise 0,025 bis 0,2 Mol und insbesondere 0,05 bis 0,15 Mol Silan der Formel (II).

Die in der obigen Stufe (c) zugegebene Säure zur Einstellung eines pH-Wertes im Bereich von 4,0 bis 8,0 kann eine anorganische oder organische Säure wie z.B. Salzsäure, Eisessig oder Adipinsäure sein, die im allgemeinen in Mengen von 0,01 bis 1,5 Mol pro Mol Silan der Formel (I) eingesetzt wird. Bevorzugte Zugabemengen sind 0,05 bis 1,0 und insbesondere 0,1 bis 0,5 Mol Säure pro Mol Silan der Formel (I), wobei bevorzugte pH-Bereiche 5 bis 7,5 und insbesondere 6 bis 7 sind.

Die Einstellung des pH-Wertes in Stufe (c) erfolgt vorzugsweise unmittelbar vor der Verwendung des Systems zur Herstellung des Elektrolyten in der Dünnschichtzelle durch thermische Behandlung. Diese thermische Behandlung wird vorzugsweise bei Temperaturen von 50 bis 150°C für 10 Minuten bis 48 Stunden durchgeführt. Bevorzugte Behandlungstemperaturen liegen im Bereich von 60 bis 120°C und insbesondere 75 bis 100°C, wobei Behandlungszeiten von 15 Minuten bis 24 Stunden und insbesondere 30 Minuten bis 12 Stunden besonders bevorzugt sind.

Im allgemeinen weist ein wie oben beschrieben hergestellter Elektrolyt nanoskalige Partikel mit Radien von bis zu 50 nm, insbesondere bis zu 20 nm, auf.

Die Viskosität der Elektrolytmischungen vor der thermischen Behandlung hängt von der Zusammensetzung und der Standzeit ab und liegt üblicherweise im Bereich von 0,2 bis 1,4 Pa.s, wobei in einigen Fällen eine Tendenz zur Strukturviskosität festgestellt wurde.

Die Schrumpfungsrate bei der thermischen Behandlung (Aushärtung) liegt bei dem nach dem obigen Verfahren hergestellten Material üblicherweise im Bereich zwischen 4 und 12% (ausgedrückt als Volumenabnahme) und kann über die Zusammensetzung des Materials gesteuert werden.

Das bei der thermischen (oder Bestrahlungs-) Behandlung den fertigen Elektrolyten liefernde Material kann z.B. so zwischen die elektrochrome Schicht und die loneninsertionsschicht eingebracht werden, daß man es auf eine oder beide der Schichten aufträgt, z.B. durch Auftropfen, Aufstreichen, Rakeln, Sprühen oder Siebdruck.

### Beispiel

### (a) Herstellung der elektrochromen Dünnschicht

Zwei Wolframoxidschichten wurden durch zweimaliges Tauchbeschichten eines vorbereiteten Substrates (vorgereinigtes ITO-beschichtetes Glassubstrat mit einer Dicke von 1 mm und einem Widerstand von 20 Ω/□mit einer 0,1- bzw. 0,5-molaren Wolframoxochlorisopropylat-Lösung erzeugt Die entsprechenden Lösungen wurden durch Umsetzung von Wolframoxidtetrachlorid (WOCI₄) mit absolutem 2-Propanol in Konzentrationen von 0,1 bzw. 0,5 Mol/Liter unter Stickstoff synthetisiert (0,1 M: 2,39 g WOCI₄ in 70 ml Alkohol; 0,5 M: 11,95 g WOCI₄ in 70 ml Alkohol). Das feste WOCI₄ wurde vorgelegt und der Alkohol wurde portionsweise bei Raumtemperatur zugegeben, wobei HCI-Gas entwich. Die Lösungen wurden anschließend 15 Minuten bei Raumtemperatur gerührt, danach 90 Minuten unter Stickstoff am Rückfluß erhitzt und daraufhin auf Raumtemperatur abgekühlt. Zu diesen Lösungen wurde dann Lithiumhydroxid in einer solchen Menge gegeben, daß sich eine Konzentration von 0,15 Mol Li pro Mol W ergab.

Die anschließende Beschichtung wurde in einer Atmosphären-kontrollierten Kammer bei 10% relativer Luftfeuchtigkeit und 20°C durchgeführt. Die erste Beschichtung erfolgte mit einer 0,1-molaren Lösung, worauf das beschichtete Substrat thermisch 30 Minuten bei 200°C verdichtet wurde. Die zweite Schicht wurde analog mit einer 0,5-molaren Lösung aufgebracht, wobei die Verdichtung bei 150°C 4 Stunden lang erfolgte.

### (b) Herstellung der nicht-färbenden loneninsertionsschicht

7,60 g (17,5 mMol) Cer(lll)nitrathexahydrat wurden in 70 ml (55,3 g) über Molekularsieb (0,3 nm) getrocknetem Ethanol gelöst. Die Lösung war klar und farblos. Unter Ausschluß von Feuchtigkeit wurden 7,11 g (17,5 mMol) Titantetraisopropylat portionsweise unter Rühren bei Raumtemperatur zugesetzt, wodurch eine gelbe klare Lösung entstand, die dann 60 Minuten am Rückfluß erhitzt wurde, wobei eine visuell erkennbare Eintrübung auftrat. Nach Abkühlen auf Raumtemperatur wurde ein vorgereinigtes ITO-beschichtetes Glassubstrat (Dicke 1,0 mm, Widerstand 20 Ω/□) in die Lösung getaucht und maschinell mit einer Geschwindigkeit von 4 mm pro Sekunde herausgezogen, wobei ein Bereich auf der ITO-beschichteten Seite durch Maskierung unbeschichtet blieb. Die Tauchbeschichtung wurde in einer geschlossenen Kammer durchgeführt, in der eine Temperatur von 20 ± 1°C und eine relative Luftfeuchtigkeit von 30 ± 1% eingestellt wurden. Nach 15 Minuten Wartezeit wurden die beschichteten Substrate in einem Ofen 20 Minuten lang bei 430°C verdichtet und danach mit einer Geschwindigkeit von etwa 20°C pro Minute abgekühlt.

### (c) Herstellung des Elektrolyten

Zur Synthese des Elektrolyten wurde 1 Mol Glycidoxypropyltrimethoxysilan mit 1,5 Mol 0,1-molarer HCI-Lösung vermischt und 24 Stunden bei Raumtemperatur gerührt, worauf das gebildete Methanol bei reduziertem Druck abdestilliert wurde.

1 Mol vorhydrolysiertes Glycidoxypropyltrimethoxysilan wurde dann mit 1,5 Mol Tetraethylenglycol vermischt und die resultierende Lösung wurde anschließend unter Rühren bei Raumtemperatur mit 0,65 Mol Lithiumperchlorat versetzt. Nach der vollständigen Auflösung des Lithiumsalzes (ca. 15 Minuten) wurden 0,08 Mol 3-Aminopropyttrimethoxysilan bei Raumtemperatur als Initiator zugegeben. Danach erfolgte die Zugabe von 0,1 Mol Tetraethoxysilan bei Raumtemperatur. Die zunächst trübe Lösung klarte nach 5 Minuten auf und wurde anschließend noch 30 Minuten lang bei Raumtemperatur gerührt. Vor der Zellmontage wurde der Elektrolyt mit konzentrierter Salzsäure in einer Menge von 1 Mol HCI (pro Mol vorhydrolysiertes Silan) versehen und gut gerührt.

### (d) Herstellung des elektrochromen Dünnschichtsystems

Die oben unter (a) hergestellte Wolframoxidschicht wurde tropfenweise mit dem gemäß (c) hergestelltem Elektrolyten bedeckt und die gemäß (b) hergestellte Cer-/Titanoxidschicht wurde leicht versetzt gegen die Wolframoxidschicht gepreßt, so daß nicht-beschichtete ITO-Flächen überstanden, und fixiert. Zur Aushärtung wurden die Schichten 24 Stunden bei 85°C behandelt. Anschließend wurden die Ränder der Zelle mit Epoxy-Kleber versiegelt, der bei 65°C 20 Stunden ausgehärtet wurde. Die überstehenden nicht-beschichteten ITO-Flächen wurden mit Silberleitlack und Kupferlitze kontaktiert.

## Patentansprüche

1. Elektrolyt für elektrochrome Systeme, erhältlich durch
(a) partielle Hydrolyse und Kondensation mindestens eines Silans der allgemeinen Formel
RₙSiX₄₋ₙ (I)
worin die Reste R, gleich oder verschieden voneinander, für nichthydrolysierbare Gruppen stehen, von denen mindestens eine eine thermisch oder photochemisch polymerisierbare (polykondensierbare) Gruppierung umfaßt, die Reste X, gleich oder verschieden voneinander, für OH oder hydrolysierbare Gruppen stehen und n 1 oder 2 ist;
(b) Umsetzung des partiell hydrolysierten und kondensierten Silans von Stufe (a) mit einem bei Raumtemperatur flüssigen Diol und/oder Triol, gegebenenfalls in Anwesenheit eines Initiators;
(c) Einstellung eines pH-Wertes im Bereich von 4,0 bis 8,0 mit Säure;
(d) Zugabe mindestens eines im System löslichen Alkalimetallsalzes zu irgendeinem Zeitpunkt nach Stufe (a) und vor Stufe (c); und
(e) thermische oder Bestrahlungs-Behandlung des resultierenden Systems;
**dadurch gekennzeichnet, daß** zu irgendeinem Zeitpunkt nach Stufe (a) und vor Stufe (c) dem System zusätzlich mindestens ein Silan der allgemeinen Formel
R'ₘSiX₄₋ₘ (II)
zugegeben wird, worin R' für Alkyl, Alkaryl, Aralkyl oder Aryl steht, die Reste X, gleich oder verschieden voneinander, für OH oder hydrolysierbare Gruppen stehen und m 0 oder 1 ist.

2. Elektrolyt nach Anspruch 1, **dadurch gekennzeichnet, daß** in Stufe (a) 10 bis 90% aller vorhandenen hydrolysierbaren Gruppen hydrolytisch abgespalten werden.

3. Elektrolyt nach Anspruch 1 oder Anspruch 2, **dadurch gekennzeichnet, daß** es sich bei den Gruppen X in den Formeln (I) und (II) um solche der Formel OR" handelt, wobei R" Alkyl mit 1 bis 8, insbesondere 1 bis 4 Kohlenstoffatomen darstellt.

4. Elektrolyt nach irgendeinem der Ansprüche 1 bis 3, **dadurch gekennzeichnet, daß** es sich bei mindestens einer der Gruppen R in Formel (I) um eine solche handelt, die eine ethylenisch ungesättigte Bindung und/oder einen Epoxidring aufweist.

5. Elektrolyt nach irgendeinem der Ansprüche 1 bis 4, **dadurch gekennzeichnet, daß** n in Formel (I) 1 ist.

6. Elektrolyt nach irgendeinem der Ansprüche 1 bis 5, **dadurch gekennzeichnet, daß** es sich bei dem bei Raumtemperatur flüssigen Diol und/oder Triol um ein Alkylenoxid-Addukt eines Diols und/oder Triols handelt.

7. Elektrolyt nach irgendeinem der Ansprüche 1 bis 6, **dadurch gekennzeichnet, daß** es sich bei dem bei Raumtemperatur flüssigen Diol um ein Poly-C₂₋₆-alkylenglycol, insbesondere um ein Polyethylen- und/oder Polypropylenglycol, handelt.

8. Elektrolyt nach irgendeinem der Ansprüche 1 bis 7, **dadurch gekennzeichnet, daß** der Initiator ausgewählt ist aus organischen Aminen, Amingruppen-haltigen Silanen, organischen Aluminiumverbindungen und von organischen und anorganischen Säuren abgeleiteten Aluminiumsalzen.

9. Elektrolyt nach irgendeinem der Ansprüche 1 bis 8, **dadurch gekennzeichnet, daß** m in der Formel (II) 0 ist oder R' für C₁₋₄-Alkyl steht.

10. Elektrolyt nach irgendeinem der Ansprüche 1 bis 9, **dadurch gekennzeichnet, daß** es sich bei dem Alkalimetallsalz um ein solches von Li, Na oder K, insbesondere um Li oder Na, und vorzugsweise um ein Perchlorat handelt.

11. Elektrolyt nach irgendeinem der Ansprüche 1 bis 10, **dadurch gekennzeichnet, daß** pro Mol Silan der allgemeinen Formel (I) eingesetzt werden:
(i) 0,01 bis 3,0 Mol Diol und/oder Triol;
(ii) 0,01 bis 2,0 Mol Alkalimetallsalz;
(iii) 0,01 bis 1,0 Mol Initiator;
(iv) 0,01 bis 0,3 Mol Silan der Formel (II).

12. Elektrolyt nach irgendeinem der Ansprüche 1 bis 11, **dadurch gekennzeichnet, daß** die Säure in Stufe (c) in einer Menge von 0,01 bis 1,5 Mol pro Mol Silan der Formel (I) eingesetzt wird.

13. Elektrolyt nach irgendeinem der Ansprüche 1 bis 12, **dadurch gekennzeichnet, daß** die thermische Behandlung bei 50 bis 150°C 10 Minuten bis 48 Stunden lang durchgeführt wird.

14. Elektrolyt-Vorstufe, erhältlich gemäß dem in Anspruch 1 definierten Verfahren ohne den Schritt (e) und gegebenenfalls ohne den Schritt (c), wobei das Silan der Formel (II) dann vor stufe (d) zugegeben wird.

## Claims

1. Electrolyte for electrochromic thin-film systems, obtainable by
(a) partial hydrolysis and condensation of at least one silane of the general formula
RₙSiX₄₋ₙ (I)
in which the radicals R, which are identical to or different from one another, are nonhydrolysable groups of which at least one comprises a thermally or photochemically polymerizable (or polycondensable) group, the radicals X, which are identical or different from one another, are OH or hydrolysable groups, and n is 1 or 2;
(b) reaction of the partially hydrolysed and condensed silane from stage (a) with a diol and/or triol which is liquid at room temperature, optionally in the presence of an initiator;
(c) adjustment of a pH in the range from 4.0 to 8.0 using acid;
(d) addition, at any moment after stage (a) and before stage (c), of at least one alkali metal salt which is soluble in the system; and
(e) thermal or irradiation treatment of the resulting system,
**characterized in that**, at any moment after stage (a) and before stage (c), at least one silane of the general formula
R'ₘSiX₄₋ₘ (II)
in which R' is alkyl, alkaryl, aralkyl or aryl, the radicals X are identical to or different from one another and are OH or hydrolysable groups, and m is 0 or 1, is additionally added to the system.

2. Electrolyte according to claim 1, **characterized in that** in stage (a) 10 to 90% of all hydrolysable groups present are eliminated by hydrolysis.

3. Electrolyte according to claim 1 or claim 2, **characterized in that** the groups X in formulae (I) and (II) are those of the formula OR" in which R" is alkyl having 1 to 8, especially 1 to 4 carbon atoms.

4. Electrolyte according to any one of claims 1 to 3, **characterized in that** the groups R in formula (I) are those having an ethylenically unsaturated bond and/or an epoxide ring.

5. Electrolyte according to any one of claims 1 to 4, **characterized in that** n in formula (I) is 1.

6. Electrolyte according to any one of claims 1 to 5, **characterized in that** the diol and/or triol which is liquid at room temperature is an alkylene oxide adduct of a diol and/or triol

7. Electrolyte according to any one of claims 1 to 6, **characterized in that** the diol which is liquid at room temperature is a poly-C₂₋₆-alkylene glycol, especially a polyethylene and/or polypropylene glycol.

8. Electrolyte according to any one of claims 1 to 7, **characterized in that** the initiator is selected from organic amines, amino group-containing silanes, organoaluminium compounds, and aluminium salts derived from of organic and inorganic acids.

9. Electrolyte according to any one of claims 1 to 8, **characterized in that** m in formula (II) is 0 or R' is C₁₋₄-alkyl.

10. Electrolyte according to any one of claims 1 to 9, **characterized in that** the alkali metal salt is a salt of Li, Na or K, especially of Li or Na, and is preferably a perchlorate.

11. Electrolyte according to any one of claims 1 to 10, **characterized in that**
(i) from 0.01 to 3.0 mol of diol and/or triol;
(ii) from 0.01 to 2.0 mol of alkali metal salt;
(iii) from 0.01 to 1.0 mol of initiator;
(iv) from 0.1 to 0.3 mol of silane of the formula (II) are employed per mole of silane of the general formula (I).

12. Electrolyte according to any one of claims 1 to 11, **characterized in that** the acid in stage (c) is employed in a quantity of from 0.01 to 1.5 mol per mole of silane of the formula (I).

13. Electrolyte according to any one of claims 1 to 12, **characterized in that** the thermal treatment is carried out at from 50 to 150°C for from 10 minutes to 38 hours.

14. Electrolyte precursor obtainable in accordance with the process defined in claim 1 without step (e) and, optionally, without step (c), the silane of formula (II) being added before stage (d).

## Revendications

1. Electrolyte pour systèmes électrochromes, que l'on peut obtenir en effectuant les opérations suivantes :
(a) hydrolyse partielle et condensation d'au moins un silane de formule générale
RₙSiX₄₋ₙ (I)
dans laquelle les restes représentés par R sont des groupes non hydrolysables, identiques ou différents les uns des autres, dont au moins l'un comprend un groupement polymérisable par voie thermique ou photochimique (polycondensable), les restes représentés par X, identiques ou différents les uns des autres, sont des groupes OH ou des groupes hydrolysables, et n vaut 1 ou 2 ;
(b) réaction du silane partiellement hydrolysé et condensé de l'étape (a) avec un diol et/ou un triol, liquide(s) à température ambiante, éventuellement en présence d'un amorceur ;
(c) ajustement du pH dans l'intervalle allant de 4,0 à 8,0, avec un acide ;
(d) addition d'au moins un sel de métal alcalin soluble dans le système, à n'importe quel moment après l'étape (a) et avant l'étape (c) ;
(e) et traitement thermique ou irradiation du système résultant ;
**caractérisé en ce que** l'on ajoute en outre au système, à n'importe quel moment après l'étape (a) et avant l'étape (c), au moins un silane de formule générale
R'ₘSiX₄₋ₘ (II)
dans laquelle R' représente un groupe alkyle, alkaryle, aralkyle ou aryle, les restes représentés par X, identiques ou différents les uns des autres, sont des groupes OH ou des groupes hydrolysables, et m vaut 0 ou 1.

2. Electrolyte conforme à la revendication 1, **caractérisé en ce que**, au cours de l'étape (a), 10 à 90 % de tous les groupes hydrolysables présents sont séparés par hydrolyse.

3. Electrolyte conforme à la revendication 1 ou 2, **caractérisé en ce que** les groupes représentés par X dans les formules (I) et (II) sont des groupes de formule OR" où R" représente un groupe alkyle comportant 1 à 8 et en particulier 1 à 4 atomes de carbone.

4. Electrolyte conforme à l'une des revendications 1 à 3, **caractérisé en ce qu'**au moins l'un des groupes représentés par R dans la formule (I) est un groupe qui comporte une liaison insaturée éthylénique et/ou un cycle époxyde.

5. Electrolyte conforme à l'une des revendications 1 à 4, **caractérisé en ce que**, dans la formule (I), n vaut 1.

6. Electrolyte conforme à l'une des revendications 1 à 5, **caractérisé en ce que** le diol et/ou le triol liquide(s) à température ambiante est/sont un ou des produit(s) d'addition d'oxyde d'alkylène sur un diol et/ou un triol.

7. Electrolyte conforme à l'une des revendications 1 à 6, **caractérisé en ce que** le diol liquide à température ambiante est un poly(alkylène en C₂₋₆)glycol, et en particulier un polyéthylèneglycol et/ou un polypropylène-glycol.

8. Electrolyte conforme à l'une des revendications 1 à 7, **caractérisé en ce que** l'amorceur est choisi parmi les amines organiques, les amino-silanes, les composés organo-aluminiques, et les sels d'aluminium dérivés d'acides organiques ou inorganiques.

9. Electrolyte conforme à l'une des revendications 1 à 8, **caractérisé en ce que**, dans la formule (II), m vaut 0 ou R' représente un groupe alkyle en C₁₋₄.

10. Electrolyte conforme à l'une des revendications 1 à 9, **caractérisé en ce que** le sel de métal alcalin est un sel de lithium, de sodium ou de potassium, en particulier un sel de lithium ou de sodium, et de préférence un perchlorate.

11. Electrolyte conforme à l'une des revendications 1 à 10, **caractérisé en ce que** l'on emploie, par mole du silane de formule générale (I) :
i) de 0,01 à 3,0 moles de diol et/ou de triol,
ii) de 0,01 à 2,0 moles de sel de métal alcalin,
iii) de 0,01 à 1,0 mole d'amorceur,
iv) et de 0,01 à 0,3 mole de silane de formule (II).

12. Electrolyte conforme à l'une des revendications 1 à 11, **caractérisé en ce que**, dans l'étape (c), on emploie de 0,01 à 1,5 mole d'acide par mole du silane de formule (I).

13. Electrolyte conforme à l'une des revendications 1 à 12, **caractérisé en ce que** le traitement thermique est effectué à une température de 50 à 150 °C et dure de 10 minutes à 48 heures.

14. Précurseur d'électrolyte, qu'on peut obtenir en suivant le procédé défini dans la revendication 1, mais en omettant l'étape (e), ainsi que, le cas échéant, l'étape (c), et en ajoutant en ce cas le silane de formule (II) avant d'effectuer l'étape (d).
